# EUROPEAN PATENT APPLICATION

(11) **EP 4 086 601 A1**
(43) Date of publication of application: **09.11.2022**
(21) Application number: 21171820.0
(22) Date of filing: 03.05.2021
(51) Int. Cl.: G01L 5/24

(54) **LOAD SENSING ELEMENT**

(71) Applicant: Hilti Aktiengesellschaft, 9494 Schaan (LI)
(72) Inventor: Pfarr, Lukas, 6800 Feldkirch (AT); Gutensohn, Markus, 6845 Hohenems (AT)
(74) Representative: Hilti Aktiengesellschaft Corporate Intellectual Property

(57) **Abstract**

Load sensing element comprising a first washer having a first opening, a second washer having a second opening, wherein the first opening and the second opening are aligned to allow a bolt to be passed through the first opening and the second opening, a circuit board, which is sandwiched between the first washer and the second washer, a first conductive track, which is provided on the circuit board, a second conductive track, which is provided on the circuit board, at least one prop for mechanically supporting the first washer on the second washer, a switch contact to electrically connect the first conductive track and the second conductive track when the first washer mechanically rests on the second washer via the prop, a spring for biasing the first washer away from the second washer, and a cushion member that is sandwiched between the circuit board and the second washer.

## Description

The invention relates to a load sensing element including washers.

EP0423477 A1 discloses an electronic load sensing washer arrangement.

European patent application with application number 20178019.4 describes a load sensing element comprising an electronic sensor which transfers a change in force to a change in resistance.

US 9483674 B1 describes a load sensing washer arrangement including a RFID tag.

It is an object of the invention to provide a load sensing element that is particular reliable and/or durable at particular low manufacturing effort.

This object is achieved by a load sensing element according to claim 1. Dependent claims refer to preferred embodiments of the invention.

The invention proposes a load sensing element comprising
- a first washer having a first opening,
- a second washer having a second opening, wherein the first opening and the second opening are aligned to allow a bolt to be, in particular simultaneously, passed through the first opening and through the second opening,
- a circuit board, which is sandwiched between the first washer and the second washer,
- a first conductive track, which is provided on the circuit board, a second conductive track, which is provided on the circuit board,
- at least one prop for mechanically supporting the first washer on the second washer,
- a switch contact to electrically connect the first conductive track and the second conductive track when the first washer mechanically rests on the second washer via the prop,
- a spring for biasing, in particular axially biasing the first washer away from the second washer, and
- a cushion member that is sandwiched, in particular axially sandwiched, between the circuit board and the second washer.

Accordingly, a load sensing element with a biased electrical switch is proposed, which switch comprises the first and second conductive track and the switch contact that faces these conductive tracks. In the default state, the first and second conductive tracks are not electrically connected by the switch contact. When the first washer is, however, pressed against the second washer with a certain force, compression results, which leads to the gap between the first and second conductive track being electrically bridged by the switch contact, i.e. to the first and second conductive track being electrically connected by the switch contact and to the switch being closed. In order to protect the circuit board from the resulting compressive forces, a prop is provided, which provides a rest for the first washer on the second washer, and which delimits axial advancement of the first washer onto the second washer, and therefore prevents compressive overloading of the circuit board. A cushion member is provided between the circuit board and the second washer. This cushion member is elastically compressible and can thus compensate mechanical tolerances, thus providing particularly reliable switching operation at low expense.

The cushion member is elastic and/or arranged axially between the circuit board and the second washer. In particular, the cushion member is configured to be reversibly compressed when the first washer mechanically rests on the second washer via the prop.

The electrical switch provided is a passive, resistive force switch. The load sensing element thus aims to check in a binary way for a threshold level of pre-tension in the load sensing element (which corresponds to a threshold level of pre-tension in the fastening point). By utilizing a binary check only, the complexity of detection as well as processing and communication elements of the system can be drastically reduced. In particular, status readout with standard microchips (e.g. a RFID tag with a tamper loop interface) can be realized.

The first washer and/or the second washer can for example comprise a metal material or a plastic material or a composite material. The first opening and the second opining are aligned, so that a bolt can be passed through both the first washer and the second washer via the respective holes. The first opening and the second opening define a longitudinal axis of the load sensing element comprising, which longitudinal axis extends through the first opening and the second opening, and which longitudinal axis defines an axis of insertion of the bolt. Throughout this document - wherever the terms "axially", "longitudinally", "radially" and "circumferentially" are used, they should, in particular, refer to the longitudinal axis of the load sensing element and/or the axis of insertion of the bolt.

The bolt can, advantageously, be the threaded bolt of an expansion anchor, of a chemical anchor or of a screw bolt.

The circuit board is sandwiched between the first washer and the second washer, i.e. it is arranged in-between both washers. The circuit board is, in particular, a laminate, comprising layers of cloth or paper embedded in cured thermoset resin. For example, the circuit board could be based on FR-4, FR-1, CEM-1 or CEM-3. The conductive tracks are both electrically conductive and PCB tracks. They are arranged at the surface of the circuit board. In particular, they comprise copper.

The prop mechanically delimits axial advancement of the first washer towards the second washer by providing a geometric constraint. The switch contact can electrically bridge the conductive tracks. It can e.g. be a conductive layer. The switch contact faces the conductive tracks to be able to contact them when axially advanced to the conductive tracks.

The spring is intended for biasing the first washer axially away from the second washer. In the default state of the load sensing element, the spring pushes the first washer away from the second washer and therefore, the switch contact is not in electrical contact with the conductive tracks (i.e. the switch is electrically open). Once an axial threshold force is applied to the washers, the spring is squeezed sufficiently to push the switch contact against the conductive tracks to electrically connect the tracks and to close the switch. As the prop delimits axial advancement of the washers, loading of the spring can be delimited to its elastic regime, in particular in order to ensure the long-term stability of the spring and a repetitive closing criterion. By changing the characteristics of the spring, the threshold force for the switch can be changed whilst otherwise maintaining the form factor of the load sensing element.

The cushion element may fulfill the following requirements:
1. be less stiff than the first washer, the second washer and the circuit board (to protect the circuit board)
2. remain in the elastic deformation regime whilst being squeezed to the maximum extent defined by the prop (to ensure a steady threshold level for the detection criterion over a multitude of loading cycles)
3. return rapidly to its initial axial position after being squeezed (to ensure a steady threshold level for the detection criterion over fast switching dynamic loading)
4. have neglectable temperature impact on the deformation characteristic (to ensure a steady threshold level for the detection criterion over a range of ambient temperatures).

It is particularly preferred that the cushion member is made of an elastomer, in particular of a synthetic rubber. The rubber is advantageously an ethylene propylene diene monomer rubber (EPDM). This can provide particularly good characteristics at particularly low expense. For example, Semperit E 4580 can be used, which has a shore hardness of 50.

In a preferred embodiment, the switch contact is arranged on the first washer, which might be advantageous e.g. in view of manufacturing. The switch contact and the first washer, respectively, can be separate elements, in particular if the first washer is electrically non-conductive or has low electrical conductivity. For example, the switch contact can be a layer, e.g. a gold layer, arranged on the first washer. However, in a preferred embodiment, the switch contact and the first washer are monolithic. Accordingly, the first washer is electrically conductive and provides the switch contact.

In an alternative embodiment, the switch contact can be arranged on the cushion member. For example, the switch contact can be a conductive layer, e.g. a gold layer, arranged on a cushion member made of an elastomer.

It is particularly preferred that the load sensing element further comprises a RFID tag (i.e. a radio-frequency identification tag) wherein the first conductive track and the second conductive track are electrically connected to the RFID tag. This can provide a particular cost-effective way of interrogating the switch. The RFID tag is preferentially a passive tag. It can for example be UHF tag and/or a NFC tag. In particular, the RFID tag can have a tamper loop interface, in particular a resettable tamper loop interface, wherein the conductive tracks and the switch contact form the tamper loop (i.e. the conductive tracks are connected to the tamper loop interface). For example, the RFID tag can be a NXP UCODE G2iM/+ (RFID UHF tag with tamper loop interface).

Alternative arrangements for interrogating the switch can, however, also be envisaged. For example, the load sensing element can include alternative wireless communication devices, such as a Bluetooth module, a NB-IoT module or/and a LoRa module, wherein in each case, an interface of the respective module is connected to the conductive tracks.

If a RFID tag or another wireless communication device is provided, this can be red out by a mobile readout device (carried e.g. by a human, a vehicle or a robot), or/and by a stationary readout device (which might be provided for permanent monitoring of the status within a certain range).

As an alternative to wireless arrangements, wired arrangements for interrogating the switch could also be envisaged. For example, the switch could be wired to a master unit for further processing. Such a master unit could be connected to a plurality of different load sensing elements, so that only one central communication interface is needed for multiple fastening points in a local application.

Advantageously, the prop is a sleeve, which is aligned with the first opening and with the second opening to allow the bolt to be, in particular simultaneously, passed through the first opening, through the second opening and through the sleeve. This provides a particularly compact, reliable and easy-to manufacture load sensing element. Advantageously, the prop and the second washer are monolithic, i.e. made of a single piece, without seams or joints.

The load sensing element may, advantageously, further comprise a housing. The housing can protect the switch from various environmental impacts. An optical identifier, such as a 1D or 2D barcode, can be provided on the housing.

The spring can preferably be an O-ring. However, other types of springs, such as helical springs, Belleville washers, or others can also be employed. In particular, the spring is a compression spring.

It is particularly preferred that the spring rests on the second washer via the circuit board and via the cushion member. Accordingly, the spring rests indirectly on the second washer, and both the circuit board and the cushion member are sandwiched between the spring and the second washer. This can allow for a particularly compact and effective setup. On the other hand, the spring can rest directly on the first washer, i.e. without any intermediate parts.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a perspective view of a first embodiment of a load sensing element.
Figure 2 is a sectional view of the load sensing element of figure 1 (in the default state).
Figure 3 is a plan view of the circuit board of the load sensing element of figure 1.
Figure 4 is a plan view of an alternative embodiment of a circuit board that can be used in the load sensing element of figure 1.

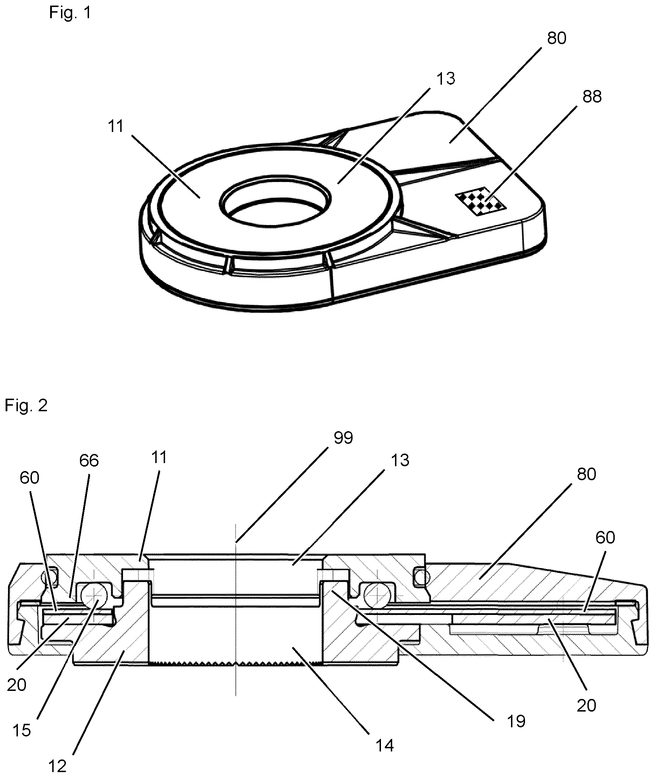

Figures 1 to 3 show an exemplary embodiment of a load sensing element. The load sensing element comprises a first washer 11 having a first opening 13 and a second washer 12 having a second opening 14. The first opening 13 and the second opening 14 are in alignment, so that a bolt can be axially (i.e. in the direction of a longitudinal axis 99 that extends through the first opening 13 and through the second opening 14) passed through the first opening 13 and through the second opening 14. A compression spring 15 is arranged between the first washer 11 and the second washer 12. This compression spring 15 biases the first washer 11 axially away from the second washer 12. In the present embodiment, the compression spring 15 is by way of example an O-ring made of an elastomer. However, this is an example only, and other type of springs could also be used, such as a Belleville washer or a helical spring.

The load sensing element further comprises a prop 19, which delimits axial advancement of the first washer 11 towards the second washer 12. In the shown embodiment, the prop 19 is, by way of example, a sleeve, which is in alignment with the first opening 13 and the second opening 14, so that the bolt can be axially passed through the first opening 13, the second opening and the sleeve. However, this is an example only, and other types of props could also be used alternatively or additionally, such as fingers that project from the first washer 11 and/or the second washer 12.

A circuit board 60 is arranged on the second washer 12. A first conductive track 61 and a second conductive track 62 are provided on the circuit board 60, wherein the first conductive track 61 and the second conductive track 62 both face the first washer 11. A switch contact 66 is provided on the first washer 11, which switch contact 66 faces the first conductive track 61 and the second conductive track 62. The switch contact 66 is thus able to bridge and to therefore electrically connect the first conductive track 61 and the second conductive track 62 when the first washer 11 is axially advanced, against the action of the compression spring 15, towards the second washer 12 and the circuit board 60 located thereon.

In the present embodiment, the first washer 11 consists of an electrically conductive steel, and the switch contact 66 is simply an uncovered section of the first washer 11. However, this is an example only, and other arrangements could also be envisaged, such as a gold or other conductive plating on a conductive or non-conductive first washer 11 and/or other conductor arrangements on a conductive or non-conductive first washer 11.

The load sensing element also comprises a RFID tag 90. The RFID tag 90 is electrically connected to the first conductive track 61 and the second conductive track 62, so that the RFID provides different signal output, dependent on whether the conductive tracks 61, 62 are connected by the switch contact 66 or not. In a preferred embodiment, the RFID tag 90 is a tamper loop RFID tag, and the conductive tracks 61, 62 and the switch contact 66 form the tamper loop.

The load sensing element further comprises an, in particular elastically compressible, cushion member 20. The cushion member 20 is sandwiched between the circuit board 60 and the second washer 12. Accordingly, the cushion member 20 cushions the circuit board 60 on the second washer 12. In particular, the cushion member 20 might include an elastomer, e.g. a rubber.

In the present embodiment, the spring 15 rests directly on the first washer 11 and it rests indirectly on the second washer 12, namely via the circuit board 60 and via the cushion member 20. This can allow a particular compact setup and/or particularly good spring characteristics. However, embodiments in which the compression spring 15 rest directly also on the second washer 12 can also be envisaged. For example, the circuit board 60 can have a thickness of about 0.5 mm, and the cushion member 20 can have a thickness of about 1.0 mm.

The load sensing element further comprises a housing 80, which houses the first washer 11, the second washer 12, the circuit board 60 and the RFID tag 90. An optical identifier 88 (a 2D barcode in the present embodiment, by way of example) is provided on the outside of the housing 80.

In use, the load sensing element is placed on a bolt so that the bolt passes through the first opening 13 and the second opening 14. A nut arranged on the bolt is tightened, which will cause the load sensing element to be compressed between the nut and a substrate in which the bolt is arranged, in particular via at least on attachment part. Compression of the load sensing element causes the first washer 11 to axially approach the second washer 12 against the force of the spring 15, until the first washer 11 axially abuts on the second washer 12 via the prop 19. In the course of this compression process, the switch contact 66 makes electrical and mechanical contact with the first conductive track 61 and the second conductive track 62, thereby electrically connecting these conductive tracks 61 and 62. Mechanical contact of the switch contact 66 with the conductive tracks 61 and 62 on the circuit board 60 presses the circuit board 60 towards the first washer 11, thereby compressing the cushion member 20.

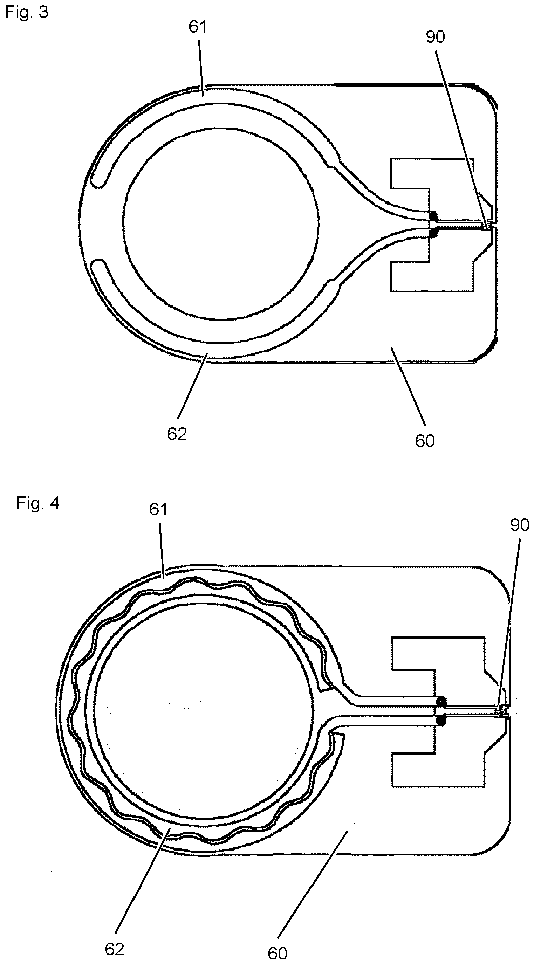

Figure 3 shows an alternative embodiment of a circuit board that can be used in place of the circuit board shown in figure 2 in the load sensing element of figure 1. The main difference between the embodiments of figures 2 and 3, respectively, is shape of the conductive tracks 61 and 62. In case of the figure 2 embodiment, the conductive tracks 61 and 62 are generally semicircular fingers each, and the switch contact 66 is intended to connect the conductive tracks 61 and 62 at their respective tips. In case of the figure 3 embodiment, the conductive tracks 61 and 62 are each loop-shaped, wherein the conductive track 62 is nested within the conductive track 61. The conductive tracks 61 and 62 are each wave-shaped alongside, wherein the respective wave shapes form an interdigital structure. Whereas the embodiment of figure 3 can provide particularly good switching characteristics, the embodiment of figure 2 can have particular high tolerance against condensed water.

In the shown embodiments, the switch contact 66 is arranged on the first washer 11. In an alternative embodiment, the switch contact could also be arranged on the cushion member 20. In this case, the conductive tracks 61 and 62 would be arranged on an opposite side of the circuit board 60, so as to once again face the switch contact 66.

## Claims

1. Load sensing element comprising
- a first washer (11) having a first opening (13),
- a second washer (12) having a second opening (14), wherein the first opening (13) and the second opening (14) are aligned to allow a bolt to be passed through the first opening (13) and through the second opening (14),
- a circuit board (60), which is sandwiched between the first washer (11) and the second washer (12),
- a first conductive track (61), which is provided on the circuit board (60), a second conductive track (62), which is provided on the circuit board (60),
- at least one prop (19) for mechanically supporting the first washer (11) on the second washer (12),
- a switch contact (66) to electrically connect the first conductive track (61) and the second conductive track (62) when the first washer (11) mechanically rests on the second washer (12) via the prop (19),
- a spring (15) for biasing the first washer (11) away from the second washer (12), and
- a cushion member (20) that is sandwiched between the circuit board (60) and the second washer (12).

2. Load sensing element according to claim 1,
**characterized in that**
the cushion member (20) is made of an elastomer, in particular of a synthetic rubber.

3. Load sensing element to any of the preceding claims,
**characterized in that**
the switch contact (66) is arranged on the first washer (11),

4. Load sensing element to any of the preceding claims,
**characterized in that**
the switch contact (66) and the first washer (11) are monolithic.

5. Load sensing element to any of claims 1 to 2,
**characterized in that**
the switch contact (66) is arranged on the cushion member (20).

6. Load sensing element to any of the preceding claims,
**characterized in that**
it further comprises a RFID tag (90), wherein the first conductive track (61) and the second conductive track (62) are electrically connected to the RFID tag (90).

7. Load sensing element to any of the preceding claims,
**characterized in that**
the prop (19) is a sleeve, which is aligned with the first opening (13) and with the second opening (14) to allow the bolt to be passed through the first opening (13), through the second opening (14) and through the sleeve.

8. Load sensing element to any of the preceding claims,
**characterized in that**
the prop (19) and the second washer (12) are monolithic.

9. Load sensing element to any of the preceding claims,
**characterized in that**
it further comprises a housing (80), on which an optical identifier (88) is provided.

10. Load sensing element to any of the preceding claims,
**characterized in that**
the spring (15) is an O-ring.

11. Load sensing element to any of the preceding claims,
**characterized in that**
the spring (15) rests on the second washer (12) via the circuit board (60) and via the cushion member (20).
